# EUROPÄISCHE PATENTSCHRIFT

(11) **EP 3 296 249 B1**
(45) Veröffentlichungstag und Bekanntmachung des Hinweises auf die Patenterteilung: **29.01.2020**
(21) Anmeldenummer: 17191125.8
(22) Anmeldetag: 14.09.2017
(51) Int. Cl.: B66F 9/065, E02F 9/08, B66F 9/10, B62D 12/00, B62D 53/02, B62D 9/00

(54) **ARTIKULIERTE ARBEITSMASCHINE**
ARTICULATED WORK MACHINE
MACHINE DE TRAVAIL ARTICULÉE

(30) Priorität: 15.09.2016 DE 102016011186
(43) Veröffentlichungstag der Anmeldung: 21.03.2018
(73) Patentinhaber: Liebherr-Werk Bischofshofen GmbH, 5500 Bischofshofen (AT)
(72) Erfinder: Stickler, Johann, 5500 Bischofshofen (AT); Dollmann, Robert, 5600 St. Johann (AT)
(74) Vertreter: Herrmann, Uwe

(56) Entgegenhaltungen:
- EP-A1- 0 638 471
- EP-B1- 0 485 732
- DE-A1- 3 903 400
- DE-A1- 10 100 775
- DE-C1- 19 645 651
- DE-U1-202006 015 828
- US-A- 3 771 241
- US-A- 5 899 292

## Beschreibung

Die vorliegende Erfindung betrifft eine Arbeitsmaschine, insbesondere einen Radlader, mit wenigstens einem Vorderwagen und mit wenigstens einem Hinterwagen, wobei der Vorderwagen zumindest eine Vorderachse der Arbeitsmaschine und der Hinterwagen zumindest eine Hinterachse der Arbeitsmaschine aufweist und wobei der Vorderwagen und der Hinterwagen durch wenigstens ein Knickgelenk gelenkig miteinander in Verbindung stehen, sowie mit wenigstens einer Lenkanordnung, die mit dem Vorderwagen und mit dem Hinterwagen derart in Verbindung steht, so dass sich bei Betätigung der Lenkanordnung der Knickwinkel zwischen Vorderwagen und Hinterwagen ändert, wobei die an der Hinterachse angeordneten Hinterräder über eine Achsschenkellenkung verfügen, die so ausgebildet ist, dass die Hinterräder eine zur Knickbewegung gleichsinnige Lenkbewegung ausführen. Eine solche Lenkung wird auch als Stereolenkung bezeichnet.

Radlader mit einer derartigen Stereolenkung sind aus dem Stand der Technik bekannt. Es wird auf die EP 0 485 732 B1 verwiesen, die einen Radlader offenbart, dessen Vorder- und Hinterwagen durch ein Knickgelenk miteinander verbunden sind. Des Weiteren ist offenbart, dass die Hinterräder des Radladers lenkbar sind und dass das zugehörige Lenkgestänge mit den Rahmenteilen des Vorder- und Hinterwagens derart in Verbindung steht, dass die Hinterräder eine der Knickbewegung überlagerte gleichsinnige Lenkbewegung ausführen. Die Räder des Hinterwagens verfügen über eine Achsschenkellenkung, die eine Auslenkung der Hinterräder bewirken. Der Achsschenkelwinkel ist gleichzusetzen mit der Achse bzw. Ebene, die den Reifen symmetrisch in der Breite teilt. Bei einer Achsschenkellenkung ist dieser Achsschenkelwinkel relativ zur Hinter- bzw. Vorderachse nicht konstant, sondern veränderlich.

Es wird des Weiteren auf die DE 101 00 775 A1 verwiesen, die ein knickgelenktes und frei achsschenkelgelentes Fahrzeug mit Teleskop zeigt. Als Vorteil wird angeführt, dass kleinere Wenderadien gegenüber einer reinen Knicklenkung durchgeführt werden können und die jeweiligen außen- bzw. innenliegenden Räder in einer Spur fahren, was einen erheblichen Hardware- und Steuerungsaufwand bedingt.

In der DE 20 2006 015 828 U1 wird ein gemeinsames Knick-/Pendelgelenk gezeigt, wobei die Relativbewegung von Vorder- gegenüber dem Hinterwagen in Längs- und Querrichtung ausgeglichen wird.

Die DE 196 45 651 C1 zeigt eine Arbeitsmaschine, die sämtliche Merkmale aus dem Oberbegriff des Anspruchs 1 aufweist.

Die US 3 770 241 A betrifft einen Lenkmechanismus für eine Arbeitsmaschine, bei dem eine Vorder- und ein Hinterwagen über ein Knickgelenk in Verbindung stehen und mit einem Lenkgestänge verbunden sind, die bei einem Ändern des Knickwinkels auch gleichzeitig die Achsschenkellenkung der am Hinterwagen angeordneten Reifen betätigt.

Die US 5 889 292 A wie auch die DE 39 03 400 A1 offenbaren eine Arbeitsmaschine mit einem Lenkmechanismus der dem aus der US 3 770 241 ähnlich ist.

Der vorliegenden Erfindung liegt die Aufgabe zugrunde, eine Arbeitsmaschine der eingangs genannten Art dahingehend weiterzubilden, dass deren Einsatzbereich gegenüber bekannten Arbeitsmaschinen der eingangs genannten Art erweitert wird, wobei vorzugsweise gleichzeitig die die Sicherheit, insbesondere Kippsicherheit z.B. nach vorne und hinten, Seitenstabilität (Stabilität gegen das Kippen zur Seite), Wendekreis, das Umfahren von Hindernissen die Fahrstrecke verbessert wird.

Diese Aufgabe wird durch eine Arbeitsmaschine mit den Merkmalen des Anspruchs 1 gelöst.

Danach ist unter anderem vorgesehen, dass an dem Vorderwagen und/oder an dem Hinterwagen ein aus zumindest zwei in einander einschiebbaren und auseinander ausziehbaren Segmenten bestehender Teleskoparm angeordnet ist, an dem das Arbeitswerkzeug der Arbeitsmaschine befestigt ist.

Dabei ist wenigstens ein Hubzylinder vorgesehen, der an dem Teleskoparm angeordnet ist und zur Winkelverstellung des Teleskoparms relativ zur Horizontalen dient und/oder wenigstens ein Ausfahrzylinder, der an dem Teleskoparm angeordnet ist und zum Ein- und Ausfahren des oder der Segmente des Teleskoparmes dient.

Vorzugsweise ist vorgesehen, dass sich im Stillstand der Arbeitsmaschine der Teleskopendpunkt relativ zum Lenkstangenlagerpunkt innerhalb der Grenzen des Arbeitswerkzeugs beliebig bewegen lässt. Es ergeben sich hierzu die Vorteile, dass auch im Falle des Näherns an eine Ecke bspw. eines Gebäudeteils, ein weiterer Fahrbetrieb der Arbeitsmaschine nicht möglich ist, trotzdem zielgenaue Manipulationen von Lasten an jeden Punkt im Arbeitsbereich durch Teleskopbewegungen erfolgen können. Eine Lenkbewegung schafft zusätzliche Flexibilität in Querrichtung. Durch diese Flexibilität können Lagerflächen, bspw. in Gebäuden effizient be-/entladen werden.

Die vorliegende Erfindung basiert somit auf dem Gedanken, eine aus dem Stand der Technik bekannte Stereolenkung für eine Arbeitsmaschine oder für einen Radlader zu nutzen, der über wenigstens einen teleskopierbaren Hubarm bzw. Ausleger verfügt. Dadurch können größere und variablere Hubhöhen und Reichweiten ermöglicht werden. Die Knicklenkung sowie die gleichsinnige Einlenkung der Hinterräder unterstützen den Nutzer bei der Feinjustierung der Last an den betreffenden Zielort in Querrichtung, so dass kein unnötiger Fahrbetrieb, wie z.B. ein Reversieren auf engstem Raum notwendig ist.

Vorzugsweise sind ausschließlich die Hinterränder einlenkbar, nicht jedoch die Vorderräder. Die Vorderräder sind somit vorzugsweise relativ zur Vorderachse starr und gegenüber dieser nicht lenkbar.

Diese Art der Lenkung kombiniert die Vorteile einer reinen Achsschenkellenkung mit jenen der herkömmlichen Knicklenkung. Es ergeben sich für den Radlader bzw. für die Arbeitsmaschine dadurch erhöhte Kipp- und Seitenstabilitäten. Der Vergleich bei exakt gleichem Lenkwinkel zwischen einer reinen Knicklenkung gegenüber einer Stereolenkung zeigt, dass der Gesamtschwerpunkt sich weiter hinten an der Arbeitsmaschine befindet, was eine höhere Kipplast bedeutet und sich zudem näher im Bereich der Fahrzeugachse befindet, was Vorteile in der Seitenstabilität mit sich bringt. Diese Vorteile werden umso größer, je weiter eingelenkt wird. Dieser Vorteil ist insbesondere bei weiten Ausladungen von Relevanz, wie sie bei Arbeitsmaschinen mit einem teleskopierbaren Hubarm auftreten.

Zusätzlich lassen sich mittels der erfindungsgemäßen Arbeitsmaschine Bereiche innerhalb und außerhalb von Gebäuden erreichen, die mit einer reinen Knick- oder reinen Achsschenkellenkung nicht erreichbar sind und Hindernisse auf der Fahrtstrecke, Kreisverkehre, Einordnen in Fahrspuren und Ecken und Säulen können besser umfahren werden. Dies ist vielfach in landwirtschaftlichen Stallungen oder beim exakten Positionieren oder Ablegen von Gütern von höchster Wichtigkeit. Durch die Knicklenkung lässt sich die Last fein positionieren (genaues Einrichten in Querrichtung), was mit einer reinen Achsschenkellenkung gemäß dem Stand der Technik nicht möglich ist.

Zum anderen wird durch den geringeren Knickwinkel gegenüber der reinen Knicklenkung aufgrund der Unterstützung der Achsschenkellenkung und Winkelsummierung (Knickwinkel + Achsschenkelwinkel), die Kipplast (Kippsicherheit und Seitenstabilität) verbessert und damit auch die Stabilität gegen das Kippen gesteigert, wodurch auch der Fahrkomfort sowie die Maschinenstabilität zunehmen. Zusätzlich wird der Fahrkomfort gegenüber dem reinen Knicklenker verbessert, wobei der kleinere Knickwinkel bewirkt, dass zwischen Vorder- und Hinterwagen mehr Raum freigeben wird, sodass der Maschinenführer einfach über den seitlichen Abstiegsbereich nach unten bzw. auch nach oben steigen kann. Durch den dadurch gegebenen längeren Radstand ist eine stabilere und ruhigere Fahrt der Arbeitsmaschine möglich. Außerdem verringert sich der Wenderadius im Vergleich zur rein knickgelenkten Arbeitsmaschine, wie sie aus dem Stand der Technik bekannt ist.

Die Vorderachse lässt sich bei diesem Konzept als Starrachse realisieren, was der Robustheit der Achse und somit der Lebensdauer zu Gute kommt.

Nach der Erfindung sind die Hinterräder unmittelbar über das Lenkgestänge zwangsgeführt, was bedeutet, das sich zwischen dem Lenkgestänge und den Hinterrädern keine weiteren Gestänge oder Aktuatoren befinden. Die Zwangsführung bedeutet, dass das Einlenken der Hinterräder bedingt durch das Einlenken des Knickgelenks automatisch erfolgt, ohne dass der Maschinenführer hierzu tätig werden muss.

Nach der Erfindung handelt es sich bei der Lenkanordnung um einen Lenkzylinder, der sowohl mit dem Vorderwagen als auch mit dem Hinterwagen verbunden ist und mittels dessen der Knickwinkel zwischen Vorderwagen und Hinterwagen eingestellt werden kann.

Um eine bessere Seitenstabilität zu erreichen, kann vorgesehen sein, dass der Lenkzylinder, der beispielsweise im Knickbereich angeordnet ist, eine Dämpfungscharakteristik oder - anordnung aufweist. Die Dämpfung des Lenkzylinders kann in jedem Bereich der Zylinderlänge bzw. der Ausfahrlänge oder auch nur in einem oder mehreren bestimmten Abschnitten oder Endlagen erfolgen. Dabei ist eine Knickwinkelmessung bzw. der Einsatz eines entsprechenden Winkelmessers vorteilhaft, da über den Knickwinkel erfasst werden kann, ob sich der oder die Lenkzylinder in ihrer Endlage befinden.

Vorzugsweise verfügen sowohl der Hinterwagen als auch der Vorderwagen über Endanschläge des Knickwinkels, die die Knickbewegung in beide Richtungen begrenzen.

Nach der Erfindung ist vorgesehen vorgesehen sein, dass die Achsschenkellenkung zumindest ein Lenkgestänge aufweist, das mit dem Vorderwagen verbunden ist. Dieses Lenkgestänge hat die Aufgabe, die Achsschenkellenkung am Hinterwagen zu bewirken und steht in diesem Fall mit dem Vorderwagen bzw. Hinterwagen in Verbindung. Die Knickbewegung des Vorderwagens relativ zum Hinterwagen wird durch das Lenkgestänge an die Achsschenkellenkung übertragen bzw. an die Radlager der Hinterachse, so dass die Hinterräder gleichsinnig ausschwenken.

Entsprechendes gilt für eine an der Vorderachse angeordnete Achsschenkellenkung, die über ein Lenkgestänge mit der Hinterachse verbunden ist. Das Lenkgestänge überträgt in diesem Fall die Relativbewegung zwischen Vorder- und Hinterwagen auf die Achsschenkellenkung der Vorderachse, so dass eine gleichsinnige Einlenkung der Vorderräder erfolgt. Vorzugsweise sind jedoch nur die Hinterräder mit einer solchen Achsschenkellenkung ausgeführt, d.h. die Vorderräder sind nicht gesondert einlenkbar.

Wir nehmen exemplarisch Bezug auf die EP 0 485 732 B1, die eine solche Ausführung einer Achsschenkellenkung zeigt und die insoweit zum Gegenstand der vorliegenden Offenbarung dieser Erfindung gemacht wird.

Die Vorderachse und/oder die Hinterachse kann/können starr am Vorderwagen bzw. am Hinterwagen befestigt sein. Dies ist im Hinblick auf die Robustheit und die Lebensdauer der Vorderachse bzw. der Hinterachse von Vorteil. Grundsätzlich sind von der Erfindung jedoch auch eine pendelnde, d.h. nicht starr verbaute Vorder- und/oder Hinterachse denkbar und von der Erfindung mit umfasst.

Das Knickgelenk, das sich zwischen Vorder- und Hinterwagen befindet und relative Quer- sowie Längsbewegungen zulässt, kann in einer bevorzugten Ausführungsform als Knickpendelgelenk ausgeführt sein. Wir nehmen zur Frage der Ausführung eines solchen Gelenks exemplarisch Bezug auf die DE 20 2006 015 828 U1, die insoweit zum Gegenstand der Offenbarung der vorliegenden Erfindung gemacht wird.

Vorzugsweise wird unter einem Knickpendelgelenk ein Gelenk verstanden, das nicht nur die von bekannten Radladern bekannte Knickbewegung zwischen Vorder- und Hinterwagen ermöglicht, d.h. eine Bewegung um eine vertikale Achse, sondern zusätzlich wenigstens eine weitere Bewegung erlaubt, wie z.B. das Nicken und/oder Pendeln. Dabei wird unter dem Nicken eine Bewegung um eine horizontale Achse und beim Pendeln eine beliebige Bewegung im dreidimensionalen Raum verstanden.

Das Pendelgelenk kann vorzugsweise in Quer- und/oder Längsrichtung zudem Relativbewegungen entgegenwirken und dämpfen, wobei hierzu beispielhaft ebenfalls auf die DE 20 2006 015 828 U1 Bezug genommen wird. Das Pendelgelenk kann im Falle von Nicken, Kippen und Pendeln mechanisch beispielsweise mit Federn, Gummieinlagen diesen Bewegungen einen Widerstand entgegensetzen bzw. diese Bewegungen dämpfen, was höhere Kippwinkel in Längs- und Querrichtung und auch eine Dämpfung bedeutet. Durch diese konstruktive Maßnahme einer Pendeldämpfung kann die achsschenkelgelenkte Hinterachse besonders vorteilhaft starr am Hinterwagen angeordnet werden. In einer bevorzugten Ausgestaltung der Erfindung entfällt somit die konstruktive Achspendelung (Querpendelung) an der Hinterachse, wobei zusätzlich Bauraumhöhe im Kotflügelbereich und Motorbereich zur freien Verfügung steht. Mit diesem Konzept lässt sich das Last-Schwingverhalten der Maschine deutlich reduzieren, was den Komfort sowie die Sicherheit beim Fahren deutlich erhöht. Der Einfachheit halber wird darauf hingewiesen, dass im Schutzumfang auch eine pendelnde Hinterachse denkbar ist und diese Stereofunktion (Achsschenkellenkung) an der Vorderachse angebaut werden kann.

Das Knickpendelgelenk kann derart ausgebildet sein, dass es der Bewegung eine Rückstellkraft entgegenbringt, wobei die Rückstellkraft vorzugsweise hydraulisch und/oder mechanisch und/oder elektrisch aufgebracht wird. Denkbar ist es, dass die Rückstellkraft durch wenigstens einen Hydraulikzylinder und/oder Feder und/oder eingelegtes Gummipaket aufgebracht wird.

Das Knickpendelgelenk ist vorzugsweise mehrteilig ausgeführt, wobei ein erster Teil die Knickbewegung ermöglicht und ein zweiter Teil, der von dem ersten Teil beabstandet sein kann, die Nick- und Pendelbewegung ermöglicht. Denkbar und von der Erfindung umfasst ist jedoch auch ein Knickpendelgelenk, das als ein einheitlichen Bauteil alle Bewegungsarten (Knicken, Nicken, Pendeln) ermöglicht.

Zum Aufbau des Knickgelenks und des Pendelgelenks wird auf die EP 0 485 732 B1 verwiesen. Unterschiede der Erfindung gegenüber diesem Stand der Technik können darin bestehen, dass das Knick-/ und/oder Pendelgelenk bei am Vorder- bzw. Hinterwagen starr angeordneten Achen die gesamte Querpendelung vollständig aufnehmen kann, ohne eine Achspendelung zuzulassen. Die gesamte Pendelung muss somit auch durch Achsschenkellenkung Lenkstange aufgenommen werden, d.h. entweder die Lenkstange wird verdrehbar und möglicherweise teleskopisch ausgeführt oder der gesamte Querpendelweg zwischen Vorder- und Hinterwagen wird über Gelenkpunkte an der Achsschenkellenkung und/oder Vorder-/Hinterwagen aufgenommen.

Eine vorteilhafte Ausführungsform stellt ein Knickgelenk dar, wobei dieses Gelenk aus zwei übereinander angeordnete Lagerpunkten besteht, die jeweils an den Vorder-/Hinterwagen angrenzen, wobei ein unterer Lagerpunkt auf einer kugelförmigen Oberfläche allseitig bewegbar ist und als unteres Lager angeordnet ist. Der obere Lagerpunkt ist vorzugsweise aus einem insbesondere nur horizontalen also drehbaren Lager ausgeführt, wobei zusätzlich anschliessend zum Hinter-/Vorderwagen hin ein zusätzliches Pendellager angeordnet ist, das die Längs-/Querpendelung aufnimmt.

Dieses Pendellager kann beispielhaft mit Federn/Gummipaketen ausgeführt sein, die sich zwischen zwei drehbaren Bereichen, bspw. am Hinterwagen befinden.

Das Pendelgelenk kann so ausgeführt sein, dass es aus mehreren Federn/Gummipaken besteht; diese Feder-/Gummipakete können mit einem der zwei Rahmenteile verspannt (verschraubt) sein oder von einem der Rahmenteile kompartimentiert werden. Die Federpakete sind von Rahmeteilen umschlossen bzw.durchdrungen, wobei die Rahmenteile über die Abmessungen der Federpakete hinausragen und somit als Endanschläge bei der Pendelbewegung fungieren.

Die Endanschläge sind jeweils abstehend vom Federpaket angeordnet, um beispielsweise die Querpendelung im und/oder gegen den Urzeigersinn von einer Nullage zu begrenzen. Die Nullage ist dann gegeben, wenn das Fahrzeug längs wie quer eben auf einer Oberfläche steht. Eine Begrenzung der Knickung/Pendelung erfolgt auf Grundlage von Feder-Nutberührungen, wobei die Endanschläge horizontal Berührungsflächen aufweisen. Somit wir am Pendelgelenk die Relativbewegung von Vorder- zu Hinterwagen begrenzt.

Pendelgelenkbewegungen müssen bis zur Begrenzung durch Endanschläge auch durch die Achsschenkellenkung aufgenommen werden, insbesondere sind hier die Relativbewegungen von der Lenkstange bzw. von den mechanischen Anbindungspunkten (Lenkstangenlagerpunkten) zum Achsschenkel hin zu benennen. Hier bietet sich zumindest ein Gelenk an. Um den Lenkwinkel am Achsschenkel durch die mechanische Lenkstange auch im Falle einer Querpendelung weitgehend konstant zu halten, wird wie vorher erwähnt, die Bewegung durch Anschläge am Pendelgelenk begenzt. Zusätzlich wird durch einen Anschlag (am Vorder-/Hinterwagen angebracht) die Bewegung der Lenkstange bspw. durch Schwingungen nach aussen hin begrenzt. Dieser Anschlag begrenzt den Lenkstangenweg in Richtung der Au-βenseite der Lenkstange.

In einer weiteren Ausgestaltung der Erfindung ist vorgesehen, dass der Hubzylinder und/oder der Ausfahrzylinder über wenigstens ein Wegmesssystem, vorzugsweise über ein in diesen integriertes Wegmesssystem zur Bestimmung der ausgefahrenen Länge des Hubzylinders bzw. des Ausfahrzylinders verfügt und/oder dass wenigstens ein Drehwinkelsensor vorgesehen ist, der angeordnet ist, den Drehwinkel des Teleskoparms zu erfassen.

Der Hubzylinder ist vorzugsweise mit dem Teil des Teleskoparms verbunden, der nicht ein- und ausgefahren wird.

Nach der Erfindung ist vorgesehen, dass durch eine Wegmessung des Hubzylinders ermittelt werden kann, welche Länge der Hubzylinder aufweist und welchen Winkel bzw. welche Höhe der Teleskoparm aufweist. Diese Größen werden nach der Erfindung mittels eines Drehwinkelsensors erfasst, der den Winkel des Teleskoparms relativ zu einem Bezugswert, insbesondere relativ zur Horizontalen ermittelt.

Wird zusätzlich der Druck im Hubzylinder erfasst, wie es nach der Erfindung der Fall ist, kann im ungelenkten Zustand (Geradeausfahrt) zu jedem Zeitpunkt die Standsicherheit (Kippmoment) der Maschine ermittelt werden. Dazu ist vorgesehen, dass der Hubzylinder nach der Erfindung über wenigstens einen Druckaufnehmer verfügt, mittels dessen der Druck im Hubzylinder erfassbar ist.

Soll das Kippmoment auch im eingelenkten Fall ermittelt werden ist eine Lenkwinkelerfassung nötig. Diese Lenkwinkelerfassung kann vorteilhaft im Bereich des Knick- /Pendelgelenks liegen und insbesondere über einen geeigneten Winkelgeber erfolgen, somit lässt sich die Standsicherheit auch im eingeknickten, d.h. gelenkten Zustand erfassen. Die Standsicherheit kann dem Fahrer dabei mittels einer geeigneten Anzeige, bzw. einer akustischen Warnung mitgeteilt werden, oder dazu genutzt werden, dass bestimmte Bewegungen verhindert werden, sobald ein bestimmter Grenzwert erreicht bzw. überschritten wird. Dies kann beispielsweise das weitere Ausfahren des Teleskops oder die Fortsetzung der Hubbewegung sein.

Weitere Vorteile des Hubzylinders mit integriertem Wegmesssystem sind die Möglichkeit zur Dämpfung der Hubzylinderbewegung, wenn diese abrupt vom Fahrer gestoppt wird oder der Zylinder eine seiner beiden Endlagen erreicht. All diese Maßnahmen dienen wiederum der Erhöhung der Standsicherheit und somit der Sicherheit im Betrieb der Maschine.

Vorzugsweise ist wenigstens ein Messaufnehmer vorgesehen, der ausgebildet ist, den Knickwinkel zwischen Vorder- und Hinterwagen zu ermitteln.

Nach der Erfindung weist die Arbeitsmaschine somit Mittel zur Berechnung der Standsicherheit der Arbeitsmaschine auf, wobei diese Mittel derart ausgeführt sind, dass der Winkel des Teleskoparmes sowie der Druck im Hubzylinder und vorzugsweise die Länge des Teleskoparmes in die Berechnung zur Standsicherheit einfließen. Vorzugsweise sind die Mittel so ausgeführt, dass wenn keine Geradeausfahrt vorliegt, auch der Knickwinkel und/oder der Pendelwinkel zwischen Vorder- und Hinterwagen in die Berechnung zur Standsicherheit einfließt.

Diese Dämpfungen können beispielsweise Bauteile wie Zylinder aber auch den Fahrantrieb betreffen und dienen dem Zweck der Erhöhung der Sicherheit. Dies ist vermehrt bei Stoppen oder Anfahren von Bewegungen der Arbeitsmaschine relevant (Verlust von Ladegut). Zusätzlich wird durch die Dämpfung betreffender Bauteile, der Maschinenführer in der Kabine weniger belastet. Die Dämpfung kann auch das Knick-/Pendelgelenk betreffen, wobei dies für Längs- und Querpendelung gilt. Die Dämpfung kann hydraulisch oder mechanisch über die Dämpfungselemente selbst (Charakteristik) und/oder an betreffenden Endanschlägen erfolgen und führt zu einer verbesserten Standfestigkeit und Stabilität der Maschine.

Es können Anzeigemittel vorgesehen sein, die ausgebildet sind, dem Bediener der Arbeitsmaschine die ermittelte Standsicherheit oder einen darauf basierenden Parameter anzuzeigen.

Schließlich können auch Begrenzungsmittel vorgesehen sein, die eine Bewegung der Arbeitsmaschine verhindern oder begrenzen, so dass ein Grenzwert für die Standsicherheit nicht unterschritten wird, d.h. die Standsicherheit gewährleistet bleibt.

Die Arbeitsmaschine kann wenigstens ein Dämpfungssystem aufweisen, das basierend auf dem Wegmesssystem zur Bestimmung der ausgefahrenen Länge des Hubzylinders und/oder des Ausfahrzylinders und/oder des gemessenen Knickwinkels eine Dämpfung einer oder mehrerer Bewegungen der Arbeitsmaschine durchführt, was zur Verbesserung der Kippsicherheit der Arbeitsmaschine beiträgt.

Weitere Einzelheiten und Vorteile der Erfindung werden anhand eines in der Zeichnung dargestellten Ausführungsbeispiels näher erläutert.

Es zeigen:
- Figur 1:: eine schematische Draufsicht auf einen Radlader gemäß der Erfindung in einer ersten Ausführungsform,
- Figur 2:: eine schematische Draufsicht auf einen Radlader gemäß der Erfindung in einer zweiten Ausführungsform,
- Figur 3:: eine schematische Seitenansicht auf einen Radlader gemäß der Erfindung im Bereich des Teleskoparms,
- Figur 4:: ein schematischer Vergleich der Nutzlast zwischen einem Radlader gemäß der Erfindung und einem Radlader gemäß dem Stand der Technik und
- Figur 5:: ein schematischer Vergleich der Wendekreise zwischen einem Radlader gemäß der Erfindung, einem vorn- und hinten angelenkten Telelader und einem Radlader gemäß dem Stand der Technik.

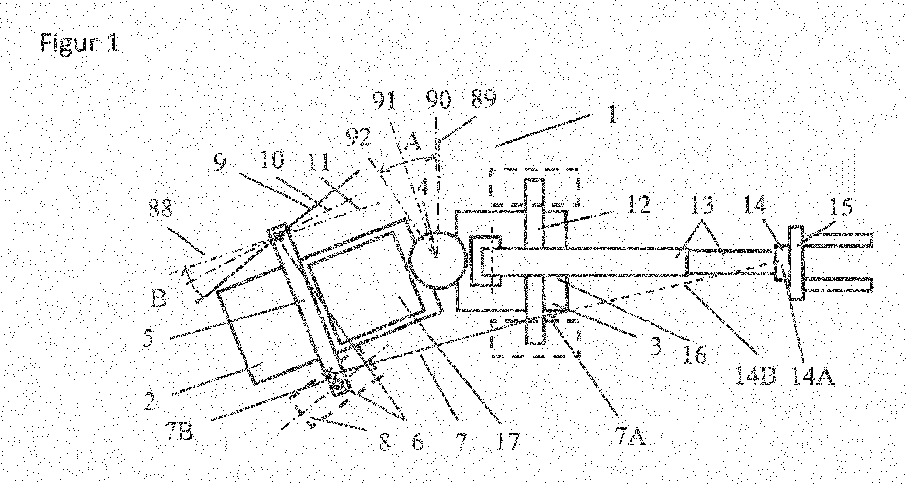

Figur 1 zeigt in einer schematischen Draufsicht einen Radlader gemäß der Erfindung.

Der Radlader 1 weist einen Vorderwagen 3 und einen Hinterwagen 2 auf, die durch ein Knickgelenk 4 gelenkig miteinander verbunden sind. Der Winkel A stellt den Knickwinkel dar. Dieser beträgt in der Geradeausfahrt des Radladers 0 und kann im eingelenkten Zustand des Radladers in beiden Richtungen jeweils einen Maximalwert annehmen in eine Richtung mit positivem und in eine mit negativem Vorzeichen.

Der Hinterwagen 2 weist eine Hinterachse 5 auf, an deren Enden sich jeweils ein Hinterrad 8 befindet. Der Vorderwagen weist eine Vorderachse 12 auf, an deren Enden sich jeweils ein Vorderrad 8 befindet.

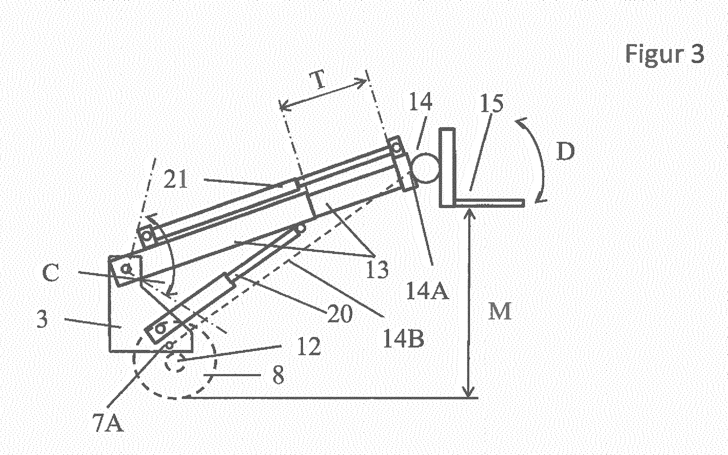

Mit dem Bezugszeichen 17 ist die Kabine gekennzeichnet und mit dem Bezugszeichen 16 das Auflager des Teleskoparms 13, der aus mehreren Segmenten besteht, von denen das unterste nicht ein- oder ausfahrbar ist und wie aus Figur 3 ersichtlich mit dem Hubzylinder 20 gelenkig in Verbindung steht. Aus diesem nicht ausfahrbaren Segment des Teleskopzylinders sind ein oder mehrere Teleskopzylindersegmente ausfahrbar und einfahrbar, wie dies beispielsweise bei Mobilkranen bekannt ist.

Mit dem Bezugszeichen 14 ist eine Kippkinematik gekennzeichnet, an der das Arbeitswerkzeug 15 angeordnet ist.

Wie dies weiter aus Figur 1 hervorgeht, ist der Winkel (Achsschenkelwinkel), den die Hinterräder 8 relativ zur Hinterachse 5 einnehmen, nicht fest, sondern variabel. Der Radlader verfügt über eine Achsschenkellenkung, die über eine am Vorderwagen 3 angelenkte Lenkstange 7 und ggf. über ein weiteres damit verbundenes Gestänge eine Auslenkung der Hinterräder 8 verursacht. Diese Auslenkung erfolgt gleichsinnig zur Auslenkung des Knickgelenks 4, d.h. wird das Knickgelenk wie in Figur 1 gezeigt beispielsweise so betätigt, dass der Radlader eine Rechtskurve fährt, erfolgt die Auslenkung der Hinterräder 8 ebenfalls so, dass eine Rechtslenkung der Arbeitsmaschine erfolgt.

Diese Achsschenkellenkung bei der vorliegenden Erfindung ist über eine mechanische Verbindung zwischen Vorderwagen 3 und der gelenkig gelagerten Lenkstange 7 sowie der Achsschenkel realisiert, wobei nach Vorgaben des Knickwinkels die Achsschenkel entsprechend des Winkels B in Figur 1 die Positionen 9, 10, 11 einnehmen. Der Achsschenkelwinkel ist gleichzusetzen mit einer Achse, die den Reifen symmetrisch in der Breite teilt.

Es ist anzumerken, dass die Lenkstange 7 als Lenkung für ein Hinter- oder beide Hinterräder mit einer Verbindung zwischen den Rädern oder mit separaten Lenkstangen für den jeweils linken und rechten Achsschenkel der Hinterachse ausgeführt sein kann. Die Position 9 stellt den Einschlag der Achsschenkellenkung mit Winkel B, an der Hinterachse 5 dar, wenn der Knickwinkel den Wert A einnimmt, wie dies in der Figur 1 dargestellt ist. Der Knickwinkel A wird durch die Referenz 89, gegenüber den Positionen 90, 91 oder 92 aufgespannt. Die Mittellage als Wert 0, ist der Winkel zwischen Referenz 89 mit Bezugszeichen 90 in eine Richtung mit einem positiven Wert bis zu einem Endanschlag bspw. 92 aufgeführt und mit einem negativen Wert bis zum anderen Endanschlag, symmetrisch oder unsymmetrisch, in diesem Fall nicht dargestellt. Der Achsschenkelwinkel B wird gegen die Referenz 88 als Mittellage angegeben, stellt sich bei Geradeausfahrt gegenüber der Position 11 mit Winkel 0 dar. Gegenüber Position 10 vergrößert sich der Winkel B und gegenüber 9 stellt ein noch größerer Winkel als ein Endanschlag mit Winkel B dar, in der jeweils einen Richtung mit positivem Winkel und in eine andere Richtung, um die Mittellage mit negativem Vorzeichen.

Der Lenkwinkel setzt sich aus den Winkeln A plus B zusammen. Wichtig ist, dass zur Summierung sowohl Winkel A und B in dieselbe Richtung positiv bzw. negativ angenommen werden. Es ist auch möglich alternativ den Knick- und/oder den Achsschenkellenkungswinkel mit einem gesamten Bereich 0 bis X° anzugeben, von einem ersten Endanschlag zu einem zweiten Endanschlag reichend, wobei sich diese auch in den weiterführenden Ausführungen zu berücksichtigen sind und von der Erfindung erfasst sind.

Nur bei Lenkwinkel 0 ist der Achsschenkelwinkel (88 gegen 11) plus Knickwinkel (89 gegen 90) gleich 0. In allen anderen Lenkwinkelstellungen ist A plus B, beispielsweise Achsschenkelwinkel (88 gegen 10) plus Knickwinkel (89 gegen 91) größer 0. Das selbe gilt für die Summe A mit Position 92 und B mit Position 9 als Maximallenkwinkel begrenzt durch Endanschläge zu benennen. Der Achsschenkelwinkel wird somit von dem Knickwinkel aufgeprägt (über Vorderwagen und Lenkstange) und bildet den Lenkwinkel.

Somit ist der Achsschenkelwinkel vom Knickwinkel abhängig und mechanisch aufgeprägt, zu jedem Knickwinkel gibt es nur einen Achschenkelwinkel bzw. zwei Achsschenkelwinkel, die sich nur durch die Vorzeichen unterscheiden.

Die Endlagen in positiver und negativer Richtung können durch Endanschläge am Fahrzeugrahmen begrenzt werden. Die Positionen 7A, 7B stellen Lenkstangenlagerpunkte dar, die von der Lenkstange und dem Vorder-/ und/oder Hinterwagen begrenzt werden. Diese Lagerpunkte können so ausgeführt sein, dass sie in alle Richtungen bewegbar sind, jedoch sind sie mechanisch mit dem Vorder-/ und Hinterwagen verbunden. Die Entfernung von Lagerpunkt 7A und des dargestellte Teleskopendpunktes 14B ist strichliert mit Position 14A dargestellt. Der Lagerpunkt 7A ist somit mit dem Vorderwagen 14 und dem an den Vorderwagen angelenkten Teleskoparm mechanisch verbunden, eine Releativbewegung von 7A zu 14A kann nur durch Betätigung von Hub- und/oder Teleskopzylinder erfolgen.

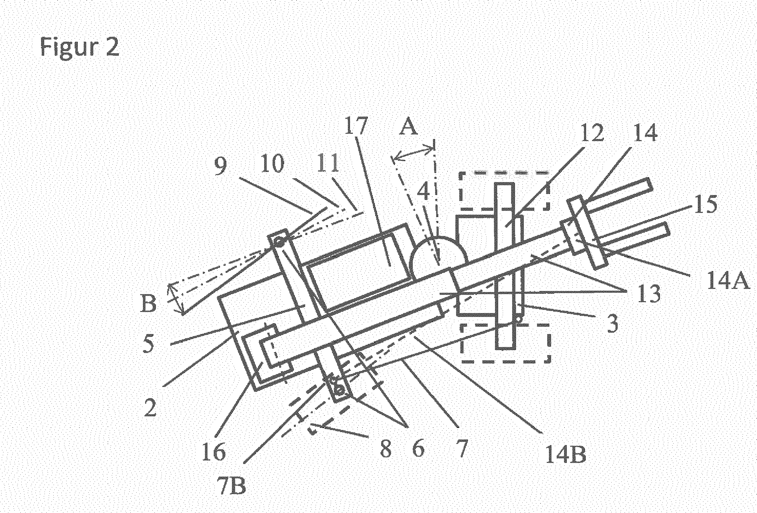

Figur 2 zeigt ein weiteres Ausführungsbeispiel eines Radladers gemäß der Erfindung, wobei gleiche oder funktionsgleiche Elemente mit denselben Bezugszeichen versehen sind, wie in Figur 1.

In der Ausführung gemäß Figur 1 wird der Teleskoparm am Vorderwagen 3 angelenkt, in dem Ausführungsbeispiel gemäß Figur 2 erfolgt diese Anlenkung am Hinterwagen 2. Die Positionen 7A, 7B stellen Lenkstangenlagerpunkte dar, die von der Lenkstange und dem Vorder-/ und/oder Hinterwagen begrenzt werden. Diese Lagerpunkte können so ausgeführt sein, dass sie in alle Richtungen bewegbar sind, jedoch sind sie mechanisch mit dem Vorder-/ und Hinterwagen verbunden. Die Entfernung von Lagerpunkt 7A und des dargestellte Teleskopendpunkt 14B ist strichliert mit Position 14A dargestellt. Es kann die Relativbewegung auch von dem Lagerpunkt 7B am Hinterwagen 17 gemessen werden, ist somit mit dem Vorderwagen 14 und dem an den Vorderwagen angelenkten Teleskoparm mechanisch verbunden, eine Releativbewegung von 7b zu 14A kann nur durch Betätigung von Hub- und/oder Teleskopzylinder erfolgen.

Aus Figur 3 ergibt sich, dass die Bewegung des Teleskopzylinders 13 einerseits mittels des Hubzylinders 20 und andererseits mittels des Ausschubzylinders 21 erfolgt. Der Hubzylinder 20 ist entweder am Vorderwagen gemäß Figur 3 oder am Hinterwagen angelenkt und bewirkt eine hauptsächliche Hub- oder Absenkbewegung. Dargestellt ist ein Lenkstangenlagerpunt 7A und der Teleskopendpunkt 14A und dessen Relativabstand 14B, wobei die jeweiligen Längen auch wie in Figur 2 gemessen werden können.

Das Auflager 16 zur Teleskopanbindung ist nur beispielhaft außermittig angeordnet. Es kann grundsätzlich in jedem Bereich des Hinter- und/oder Vorderwagens angeordnet werden, wobei die Kabine angepasst werden muss.

Der Hubarm 20 kann von einem unter Anschlagpunkt mit 0 angenommen werden und wird bis zu einem Maximalwert gemessen. Alternativ kann der Hubarm bzw. der Hubzylinderwinkel von einer horizontalen Bezugsgröße (waagrecht) in positive Richtung bzw. eine negative Richtung eingeteilt werden soweit dies notwendig ist. Dies ist in Figur 3 mit dem Winkel C beschrieben.

Der Teleskoparm 13 besteht aus zumindest zwei ineinander verschiebbaren Armen bzw. Segmenten, wobei einer zumindest der Hubarm und der andere der Auszugsarm ist, die sich durch einen Ausschubzylinder bewegen lassen, wobei der Ausschubzylinder 21 an Hub- und Ausschubarm angelenkt wird. In dem in Figur 3 dargestellten Ausführungsbeispiel ist der Ausschubarm um die Länge T ausgefahren.

Charakteristisch für den Teleskoparm ist die Möglichkeit die Manipulationshöhe M zu vergrößern, ohne den Winkel C vergrößern zu müssen, dies kann einfach durch die Betätigung des Ausschubarms durchgeführt werden. An den Teleskoparm anschließend kann ein Arbeitswerkzeug angebaut werden. Dies kann beispielhaft eine Schaufel, eine Gabel, ein Lasthaken oder ein Greifer sein.

Zwischen Teleskoparm und dem Arbeitswerkzeug kann sich noch eine kinematische Anlenkung 14 des Arbeitswerkzeugs befinden. Diese kinematische Anlenkung kann aus Hydraulikleitungen, Hydraulikzylindern, Ventilen die auch teilweise innerhalb des Teleskoparms untergebracht werden, aus Verbindungslaschen, Umlenkhebeln und Lagerpunkten zusammensetzen und bewirken eine gewünschte kinematische Bewegung, bzw. Kippbewegung des Arbeitswerkzeugs. Der Winkel von einer Minimal- zu einer Maximalbewegung des Arbeitswerkzeugs wird mit D bezeichnet und wird von der kinematischen Anlenkung bestimmt. Zusätzlich kann in diesem Bereich noch ein Schnellwechsler installiert sein, der ein einfaches Wechseln der Arbeitswerkzeuge von der Kabine aus ermöglicht und zumeist hydraulisch angesteuert ist beinhalten.

Die Arbeitsmaschine kann Messeinrichtungen aufweisen, die die Messgrößen, wie z.B. Winkel und Länge des Teleskopauslegers bestimmen und ggf. den Druck im Hubzylinder sowie den Knickwinkel oder die durch die Last bedingte Gewichtskraft, bestimmen. Des Weiteren können Berechnungsmittel vorhanden sein, die aus einer oder mehreren dieser Größen eine Kippstabilität der Arbeitsmaschine berechnen, wobei Anzeigemittel vorhanden sein können, die diesen Wert der Kippstabilität anzeigen. Auch können Alarmmittel vorhanden sein, die einen Alarm ausgeben, wenn ein für die Kippstabilität kritischer Wert angezeigt wird.

Darüber hinaus können als Sicherungsmittel Begrenzer vorhanden sein, die sicherstellen, dass keine Betriebsposition der Arbeitsmaschine erreicht wird, bei der die Gefahr des Kippens besteht. Diese Begrenzer können z.B. ein weiteres Einknicken, ein weiteres Austeleskopieren etc. über einen Grenzwert hinaus verhindern.

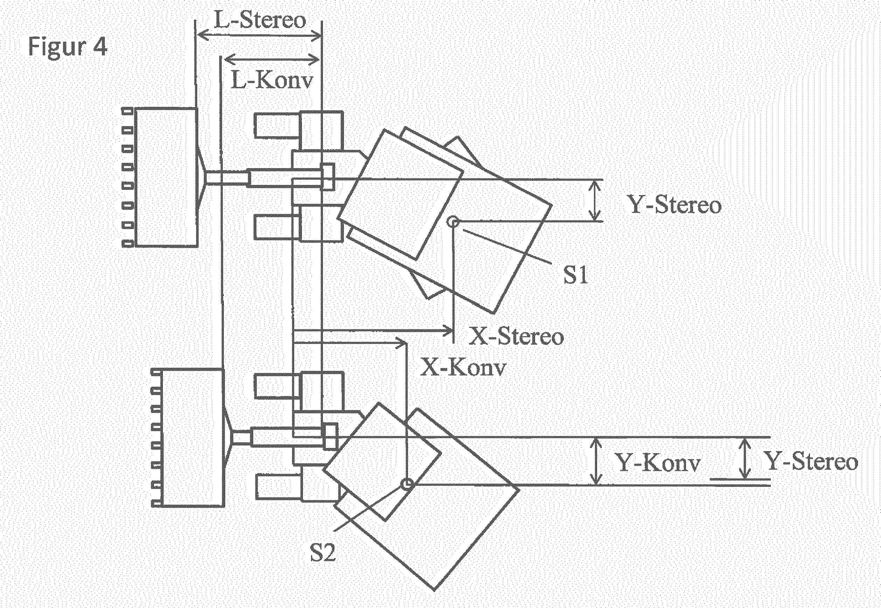

Figur 4 zeigt die Vorteile der vorliegenden Erfindung am Beispiel der Nutzlast sowie der Kippstabilität.

Figur 4 zeigt in der oberen Ansicht einen Radlader gemäß der Erfindung und in der unteren Ansicht einen Radlader gemäß dem Stand der Technik, d.h. ohne Achsschenkellenkung. Wie dies aus Figur 4 hervorgeht, benötigt der Radlader gemäß der Erfindung zum Erreichen der gewünschten Position einen kleineren Knickwinkel, da die zusätzliche Lenkbewegung durch die hinteren Räder vorgenommen wird.

Dies hat zur Folge, dass der Abstand zwischen den vorderen Rädern und dem Schwerpunkt S der Arbeitsmaschine mit Schwerpunkt S2 (X-Konv (= Stand der Technik) bzw. X-Stereo (= Erfindung) mit Schwerpunkt S1) und damit auch zwischen der Nutzlast in der Schaufel (etc.) und dem Schwerpunkt der Maschine bei dem erfindungsgemäßen Radlader größer ist als bei einem Radlader gemäß der Erfindung. Dies wiederum hat zur Folge, dass bei konstantem Knick/-Lenkwinkel entweder größere Nutzlasten bei der Bedingung L-Stereo ist gleich L-Konv aufgenommen werden oder bei gleicher Nutzlast die Ausladung L-Stereo größer als L-Konv ist. Es ist auch möglich bei gleicher Nutzlast und gleicher Teleskop-Ausladung den Knick-/Lenkwinkel zu vergrößern bzw. eine Kombination daraus zuzulassen, d.h. bspw. aus größerer Nutzlasten und/oder Lenkwinkel und oder Ausladungen, so dass die Standsicherheit gewährleistet ist.

Abgesehen davon erhöht sich die Seitenstabilität, da bei der erfindungsgemäßen Maschine auch in Querrichtung der Schwerpunkt weiter ins Zentrum rückt, so dass die Arbeitsmaschine stabiler gegen seitliches Umkippen ist (Y-Stereo ist kleiner als Y-Konv).

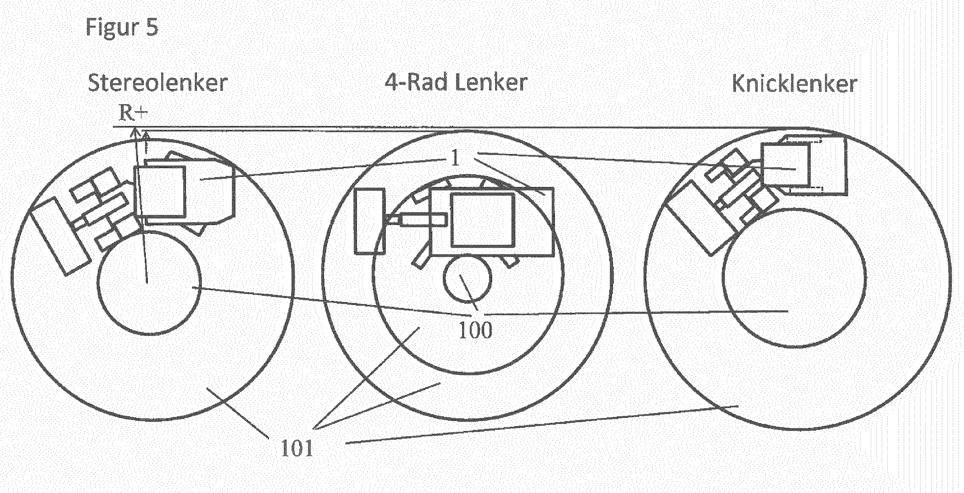

Figur 5 zeigt, dass der Teleradlader gemäß der Erfindung (linkes Bild: "Stereolader"), gegenüber einen vorn- und hinten angelenkten Teleradlader mit Achsschenkellenkung ("4-Rad Lenker") mit fixem Stahlbau und einem weiteren Vergleichsgerät dem konventionellen knickgelenkten Radlader ("Knicklenker") Vorteile hat. Obwohl der Teleradlader mit 4 Rad-Lenkung einen engeren Kurvenradius fahren kann, steht das Hubgerüst jedoch unvorteilhaft nicht in Fahrtrichtung und die Schaufel benötigt dadurch zusätzlichen Fläche beim Einlenken im Außenbereich 101. Dieser Außenbereich (Außenradius R+) vergrößert sich noch je größere Baulänge das Teleskop und dessen Arbeitswerkzeug sowie wie weit das Teleskop bzw. Arbeitswerkzeug ausgefahren wird. Zusätzlich kann durch den fixen Stahlrahmen der Teleradlader, im Innenbereich 100 Hindernisse schlechter umfahren als der Stereo Radlader.

Es wird noch erwähnt, dass beim Stereolader, d.h. einem Lader mit Knick- und Achsschenkellenkung bei einer beliebigen Fahrtstrecke und insbesondere bei beengten Platzverhältnissen gegenüber einem Radlader mit konventioneller Knicklenkung Vorteile bestehen.

## Patentansprüche

1. Arbeitsmaschine (1), insbesondere Radlader, mit
einem Vorderwagen (3) und mit einem Hinterwagen (2), wobei
der Vorderwagen (3) eine Vorderachse (12) der Arbeitsmaschine (1) aufweist,
der Hinterwagen (2) eine Hinterachse (5) der Arbeitsmaschine (1) aufweist, und
der Vorderwagen (3) und der Hinterwagen (2) durch ein Knickgelenk (4) gelenkig miteinander in Verbindung stehen,
einer Lenkanordnung, wobei es sich bei der Lenkanordnung um einen Lenkzylinder handelt,
einem an dem Vorderwagen (3) und/oder an dem Hinterwagen (2) aus zumindest zwei ineinander einschiebbaren und auseinander ausziehbaren Segmenten bestehender Teleskoparm (13), an dem das Arbeitswerkzeug der Arbeitsmaschine (1) befestigt ist,
einem Hubzylinder (20), der an dem Teleskoparm (13) angeordnet ist und zur Winkelverstellung des Teleskoparms (13) relativ zur Horizontalen dient, und
einem Ausfahrzylinder (21), der an dem Teleskoparm (13) angeordnet ist und zum Ein- und Ausfahren des oder der Segmente des Teleskoparms (13) dient, wobei
die Hinterräder (8) unmittelbar über ein Lenkgestänge (7) zwangsgeführt sind, und
das Lenkgestänge (7) mit einem oder mehreren Achsschenkellagerpunkten (7B) zusammenwirkt, die ihrerseits mit den Hinterrädern (8) in Verbindung stehen,
**dadurch gekennzeichnet, dass**
der Lenkzylinder der Lenkanordnung sowohl mit dem Vorderwagen (3) als auch mit dem Hinterwagen (2) verbunden ist und mit dem Vorderwagen (3) und mit dem Hinterwagen (2) derart in Verbindung steht, dass sich bei Betätigung der Lenkanordnung der Knickwinkel zwischen Vorderwagen (3) und Hinterwagen (2) ändert, wobei
die an der Hinterachse (5) angeordneten Hinterräder (8) über eine Achsschenkellenkung verfügen, die so ausgebildet ist, dass die Hinterräder (8) eine zur Knickbewegung gleichsinnige Lenkbewegung ausführen,
die Achsschenkellenkung zumindest ein Lenkgestänge (7) aufweist, das mit dem Vorderwagen (3) verbunden ist,
ein Drehwinkelsensor vorgesehen ist, der angeordnet ist, den Drehwinkel des Teleskoparms (13) zu erfassen,
der Hubzylinder (20) über einen Druckaufnehmer verfügt, mittels dessen der Druck im Hubzylinder (20) erfassbar ist, und
Mittel zur Berechung der Standsicherheit der Arbeitsmaschine (1) vorgesehen sind, wobei diese Mittel derart ausgeführt sind, dass der Winkel des Teleskoparms (13) sowie der Druck im Hubzylinder (20) in die Berechnung zur Standsicherheit einfließen.

2. Arbeitsmaschine (1) nach Anspruch 1, **dadurch gekennzeichnet, dass** die Lenkanordnung über eine Dämpfungsanordnung verfügt, die die Bewegung der Lenkanordnung dämpft.

3. Arbeitsmaschine (1) nach Anspruch 1 oder 2, **dadurch kennzeichnet, dass** das Lenkgestänge (7) in horizontaler und vertikaler Richtung bewegbar angeordnet ist.

4. Arbeitsmaschine (1) nach einem der vorhergehenden Ansprüche, **dadurch gekennzeichnet, dass** die Vorderachse (12) und die Hinterachse (5) starr am Vorderwagen (3) bzw. am Hinterwagen (2) befestigt ist.

5. Arbeitsmaschine (1) nach einem der vorhergehenden Ansprüche, **dadurch gekennzeichnet, dass** das Knickgelenk (4) als Knickpendelgelenk ausgeführt ist.

6. Arbeitsmaschine (1) nach Anspruch 5, **dadurch gekennzeichnet, dass** das Knickpendelgelenk derart ausgebildet ist, dass es der Bewegung eine Rückstellkraft entgegenbringt, wobei die Rückstellkraft vorzugsweise hydraulisch und/oder mechanisch und/oder elektrisch aufgebracht wird und/oder dass die Rückstellkraft durch wenigstens einen Hydraulikzylinder und/oder Feder und/oder eingelegtes Gummipaket aufgebracht wird.

7. Arbeitsmaschine (1) nach einem der vorhergehenden Ansprüche, **dadurch gekennzeichnet, dass** der Hubzylinder (20) und/oder der Ausfahrzylinder (21) über wenigstens ein Wegmesssystem, vorzugsweise über ein in diesen integriertes Wegmesssystem zur Bestimmung der ausgefahrenen Länge des Hubzylinders (20) bzw. des Ausfahrzylinders (21) verfügt.

8. Arbeitsmaschine (1) nach einem der vorhergehenden Ansprüche, **dadurch gekennzeichnet, dass** wenigstens ein Messaufnehmer vorgesehen ist, der ausgebildet ist, den Knickwinkel zwischen Vorder- und Hinterwagen (2) zu ermitteln.

9. Arbeitsmaschine (1) nach einem der vorhergehenden Ansprüche, **dadurch gekennzeichnet, dass** die Mittel derart ausgeführt sind, dass auch der Knickwinkel zwischen Vorder- und Hinterwagen (2) in die Berechnung zur Standsicherheit einfließt.

10. Arbeitsmaschine (1) nach einem der vorhergehenden Ansprüche, **dadurch gekennzeichnet, dass** Anzeigemittel vorgesehen sind, die ausgebildet sind, dem Bediener der Arbeitsmaschine (1) die ermittelte Standsicherheit oder einen darauf basierenden Parameter anzuzeigen.

11. Arbeitsmaschine (1) nach einem der einem der vorhergehenden Ansprüche, **dadurch gekennzeichnet, dass** Begrenzungsmittel vorgesehen sind, die eine Bewegung der Arbeitsmaschine (1) verhindern oder begrenzen, so dass ein Grenzwert für die Standsicherheit nicht unterschritten wird.

12. Arbeitsmaschine (1) nach einem der vorhergehenden Ansprüche, **dadurch gekennzeichnet, dass** wenigstens ein Dämpfungssystem vorgesehen ist, dass ausgebildet ist, basierend auf dem Wegmesssystem zur Bestimmung der ausgefahrenen Länge des Hubzylinders (20) und/oder das Ausfahrzylinders (21) und/oder des gemessenen Knickwinkels eine Dämpfung einer oder mehrerer Bewegungen der Arbeitsmaschine (1) durchzuführen.

## Claims

1. A work machine (1), in particular a wheel loader, comprising
a front part (3) and having a rear part (2), wherein
the front part (3) has a front axle (12) of the work machine (1);
the rear part (2) has a rear axle (5) of the work machine (1); and
the front part (3) and the rear part (2) are connected to one another in an articulated manner by an articulated joint (4);
a steering arrangement, with the steering arrangement being a steering cylinder;
a telescopic arm (13) at the front part (3) and/or at the rear part (2) comprising at least two segments that can pushed into one another and pulled out of one another, with the equipment tool of the work machine (1) being fastened to said telescopic arm (13);
a lift cylinder (20) that is arranged at the telescopic arm (13) and that serves the angular adjustment of the telescopic arm (13) relative to the horizontal; and
an extension cylinder (21) that is arranged at the telescopic arm (13) and that serves to travel the segment or segments of the telescopic arm (13) in and out,
wherein
the rear wheels (8) are directly positively actuated via a connector linkage (7); and
the connector linkage (7) cooperates with one or more axle pivot bearing points (7B) that are in turn connected to the rear wheels (8),
**characterized in that**
the steering cylinder of the steering arrangement is connected both to the front part (3) and to the rear part (2) and is connected to the front part (3) and to the rear part (2) such that the articulation angle between the front part (3) and the rear part (2) changes on an actuation of the steering arrangement,
with
the rear wheels (8) arranged at the rear axle (5) having an axle pivot steering that is configured such that the rear wheels (8) carry out a steering movement in the same direction as the articulated movement;
the axle pivot steering having at least one connector linkage (7) that is connected to the front part (3);
an angle of rotation sensor being provided that is arranged to detect the angle of rotation of the telescopic arm (13);
the lift cylinder (20) having a pressure transducer by means of which the pressure in the lift cylinder (20) can be detected; and
means for calculating the stability of the work machine (1) being provided, with these means being configured such that the angle and the length of the telescopic arm (3) and the pressure in the lift cylinder (20) enter into the calculation of the stability.

2. A work machine (1) in accordance with claim 1, **characterized in that** the steering arrangement has a damping arrangement that damps the movement of the steering arrangement.

3. A work machine (1) in accordance with claim 1 or claim 2, **characterized in that** the connector linkage (7) is arranged movably in the horizontal and vertical directions.

4. A work machine (1) in accordance with one of the preceding claims, **characterized in that** the front axle (12) and the rear axle (5) are rigidly connected to the front part (3) and the rear part (2) respectively.

5. A work machine (1) in accordance with one of the preceding claims, **characterized in that** the articulated joint (4) is configured as an articulated pendulum joint.

6. A work machine (1) in accordance with claim 5, **characterized in that** the articulated pendulum joint is configured such that it opposes the movement with a return force, with the return force preferably being applied hydraulically and/or mechanically and/or electrically and/or such that the return force is applied by at least one hydraulic cylinder and/or spring and/or inserted rubber packet.

7. A work machine (1) in accordance with one of the preceding claims, **characterized in that** the lift cylinder (20) and/or the extension cylinder (21) has at least one distance measuring system, preferably a distance measuring system integrated therein, for determining the extended length of the lift cylinder (20) or of the extension cylinder (21).

8. A work machine (1) in accordance with one of the preceding claims, **characterized in that** at least one measurement transducer is provided that is configured to determine the articulation angle between the front part and the rear part (2).

9. A work machine (1) in accordance with one of the preceding claims, **characterized in that** the means are configured such that the articulation angle between the front part and the rear part (2) also enters into the calculation of the stability.

10. A work machine (1) in accordance with one of the preceding claims, **characterized in that** display means are provided that are configured to display the determined stability or a parameter based thereon to the operator of the work machine (1).

11. A work machine (1) in accordance with one of the preceding claims, **characterized in that** bounding means are provided that prevent or bound a movement of the work machine (1) such that a limit value for the stability is not fallen below.

12. A work machine (1) in accordance with one of the preceding claims, **characterized in that** at least one damping system is provided that is configured to carry out a damping of one or more movements of the work machine (1) based on the distance measuring system to determine the extended length of the lift cylinder (20) and/or of the extension cylinder (21) and/or the measured articulation angle.

## Revendications

1. Machine de travail (1), en particulier chargeur sur pneus, comprenant un avant-train (3) et un arrière-train (2),
l'avant-train (3) comportant un essieu avant (12) de la machine de travail (1),
l'arrière-train (2) comportant un essieu arrière (5) de la machine de travail (1), et
l'avant-train (3) et l'arrière-train (2) étant en liaison articulée l'un avec l'autre au moyen d'une articulation (4),
un agencement de direction, l'agencement de direction étant un vérin de direction,
un bras télescopique (13) constitué d'au moins deux segments insérables l'un dans l'autre et extractibles l'un de l'autre, situé sur l'avant-train (3) et/ou l'arrière-train (2) et auquel est fixé l'outil de travail de la machine de travail (1),
un vérin de levage (20), qui est disposé sur le bras télescopique (13) et sert au réglage angulaire du bras télescopique (13) par rapport à l'horizontale, et
un vérin de déploiement (21), qui est disposé sur le bras télescopique (13) et qui sert à rentrer et déployer le ou les segments du bras télescopique (13), dans laquelle
les roues arrière (8) sont guidées de manière forcée directement par le biais d'une timonerie de direction (7), et
la timonerie de direction (7) coopère avec un ou plusieurs points d'articulation de fusée d'essieu (7B), qui sont de leur côté en liaison avec les roues arrière (8),
**caractérisée en ce que**
le vérin de direction de l'agencement de direction est relié aussi bien à l'avant-train (3) qu'à l'arrière-train (2) et est en liaison avec l'avant-train (3) et avec l'arrière-train (2) de telle manière que l'angle d'articulation entre l'avant-train (3) et l'arrière-train (2) se modifie lors de l'actionnement de l'agencement de direction,
les roues arrière (8) disposées sur l'essieu arrière (5) disposant d'une direction à fusée, qui est conçue de telle manière que les roues arrière (8) exécutent un mouvement de direction dans le même sens que le mouvement d'articulation,
la direction à fusée comportant au moins une timonerie de direction (7), qui est reliée à l'avant-train (3),
un capteur d'angle de rotation étant prévu, qui est disposé de manière à détecter l'angle de rotation du bras télescopique (13),
le vérin de levage (20) disposant d'un capteur de pression, au moyen duquel la pression dans le vérin de levage (20) peut être détectée, et
des moyens pour calculer la stabilité de la machine de travail (1) étant prévus, ces moyens étant réalisés de telle manière que l'angle du bras télescopique (13) ainsi que la pression dans le vérin de levage (20) sont pris en compte dans le calcul pour la stabilité.

2. Machine de travail (1) selon la revendication 1, **caractérisée en ce que** l'agencement de direction dispose d'un agencement d'amortissement, qui amortit le mouvement de l'agencement de direction.

3. Machine de travail (1) selon la revendication 1 ou 2, **caractérisée en ce que** la timonerie de direction (7) est disposée mobile dans le sens horizontal et vertical.

4. Machine de travail (1) selon l'une des revendications précédentes, **caractérisée en ce que** l'essieu avant (12) et l'essieu arrière (5) sont fixés de manière rigide respectivement à l'avant-train (3) et à l'arrière-train (2).

5. Machine de travail (1) selon l'une des revendications précédentes, **caractérisé en ce que** l'articulation (4) est réalisée sous la forme d'une articulation à pendule.

6. Machine de travail (1) selon la revendication 5, **caractérisée en ce que** l'articulation à pendule est conçue de telle manière qu'elle exerce une force de rappel à l'encontre du mouvement, la force de rappel étant appliquée de préférence de manière hydraulique et/ou mécanique et/ou électrique et/ou **en ce que** la force de rappel est appliquée par au moins un vérin hydraulique et/ou un ressort et/ou un coussin de caoutchouc inséré.

7. Machine de travail (1) selon l'une des revendications précédentes, **caractérisée en ce que** le vérin de levage (20) et/ou le vérin de déploiement (21) dispose d'au moins un système de mesure de déplacement, de préférence d'un système de mesure de déplacement intégré dans celui-ci pour déterminer la longueur sortie du cylindre de levage (20) ou du cylindre de déploiement (21).

8. Machine de travail (1) selon l'une des revendications précédentes, **caractérisée en ce qu'**au moins un capteur de mesure est prévu, qui est conçu pour déterminer l'angle d'articulation entre l'avant-train et l'arrière-train (2).

9. Machine de travail (1) selon l'une des revendications précédentes, **caractérisée en ce que** les moyens sont réalisés de telle manière que l'angle d'articulation entre l'avant-train et l'arrière-train (2) est aussi pris en compte dans le calcul pour la stabilité.

10. Machine de travail (1) selon l'une des revendications précédentes, **caractérisée en ce que** des moyens d'affichage sont prévus, qui sont conçus pour indiquer à l'utilisateur de la machine de travail (1) la stabilité déterminée ou un paramètre basé sur celle-ci.

11. Machine de travail (1) selon l'une des revendications précédentes, **caractérisée en ce que** des moyens de limitation sont prévus, qui empêchent ou limitent un mouvement de la machine de travail (1), de telle sorte qu'une valeur limite pour la stabilité n'est pas dépassée vers le bas.

12. Machine de travail (1) selon l'une des revendications précédentes, **caractérisée en ce qu'**au moins un système d'amortissement est prévu, qui est conçu pour effectuer un amortissement d'un ou de plusieurs mouvements de la machine de travail (1) sur la base du système de mesure de déplacement pour déterminer la longueur sortie du vérin de levage (20) et/ou du vérin de déploiement (21) et/ou de l'angle d'articulation.
